# EUROPÄISCHE PATENTSCHRIFT

(11) **EP 3 977 204 B1**
(45) Veröffentlichungstag und Bekanntmachung des Hinweises auf die Patenterteilung: **11.12.2024**
(21) Anmeldenummer: 20726339.3
(22) Anmeldetag: 12.05.2020
(51) Int. Cl.: G03B 17/08, G03B 17/56, G01J 3/28

(54) **UNTERWASSERVORRICHTUNG ZUR BILDAUFNAHME EINES WASSERBODENS**
UNDERWATER APPARATUS FOR IMAGE-CAPTURING OF THE FLOOR OF A BODY OF WATER
DISPOSITIF SOUS-MARIN POUR LA PRISE DE VUES D'UN FOND AQUATIQUE

(30) Priorität: 28.05.2019 DE 102019114269
(43) Veröffentlichungstag der Anmeldung: 06.04.2022
(73) Patentinhaber: Planblue GmbH, 28359 Bremen (DE)
(72) Erfinder: KANDUKURI, Raja, 28359 Bremen (DE); RIGOT, Guy, 28359 Bremen (DE); BUENO, Alvaro, 28359 Bremen (DE)
(74) Vertreter: Dennemeyer & Associates S.A.
(86) Internationale Anmeldenummer: PCT/EP2020/063175
(87) Internationale Veröffentlichungsnummer: WO 2020/239432

(56) Entgegenhaltungen:
- US-A1- 2013 229 515
- US-A1- 2013 229 515
- US-A1- 2016 178 993
- US-A1- 2016 178 993
- US-A1- 2018 095 344
- US-A1- 2018 095 344
- US-B1- 6 262 761
- US-B1- 6 262 761
- ARJUN CHENNU ET AL: "A diver-operated hyperspectral imaging and topographic surveying system for automated mapping of benthic habitats", SCIENTIFIC REPORTS, vol. 7, no. 1, 2 August 2017 (2017-08-02), XP055660413, DOI: 10.1038/s41598-017-07337-y
- "nikon coolpix aw130 manual", 31 December 2015 (2015-12-31), pages 1 - 234, XP093171909, Retrieved from the Internet <URL:https://download.nikonimglib.com/archive2/oNoCa00m4sZ302KxYqP19oXRlV67/AW130RM_(En)04.pdf> [retrieved on 20240607]
- ARJUN CHENNU ET AL: "A diver-operated hyperspectral imaging and topographic surveying system for automated mapping of benthic habitats", SCIENTIFIC REPORTS, vol. 7, no. 1, 2 August 2017 (2017-08-02), XP055660413, DOI: 10.1038/s41598-017-07337-y

## Beschreibung

Die Erfindung betrifft eine Unterwasservorrichtung mit einer Hyperspektralkamera zur Bildaufnahme eines Wasserbodens. Darüber hinaus betrifft die Erfindung ein autonomes Unterwasserfahrzeug und ein kabelgeführtes Unterwasserfahrzeug mit jeweils einer solchen Unterwasservorrichtung.

Es besteht sowohl aus ökonomischer als auch aus ökologischer Sicht ein Bedarf, Meeres- und Süßwasserökosysteme zu überwachen. Dabei ist eine Herausforderung bei der Überwachung der Ökosysteme, dass einerseits eine feine räumliche Auflösung des Wasserbodens benötigt wird, um die hohe Vielfalt der Organismen in ausreichender Genauigkeit zu erfassen, und andererseits eine große Fläche untersucht werden muss.

Aus dem Stand der Technik sind Unterwasservorrichtungen bekannt, die eine Kamera aufweisen und mittels denen Bilder vom Wasserboden aufgenommen werden. Die bekannten Unterwasservorrichtungen sind sehr groß ausgebildet und umständlich aufgebaut. Dadurch ist eine Anpassung der Unterwasservorrichtung an unterschiedliche Einsatzgebiete nur unter hohem Zeitaufwand möglich. Insbesondere ist ein Einbau und Ausbau von in der Unterwasservorrichtung vorhandenen elektrischen Verbraucher nur unter hohem Zeitaufwand möglich.

US 2016/178993 A1 beschreibt eine kompakte Unterwasserkamera welche mit einem herkömmlichen Kamerasystem ausgestattet ist.

Die Aufgabe der Erfindung besteht darin, eine Unterwasservorrichtung anzugeben, die schnell an das gewünschte Einsatzgebiet und/oder den Einsatzzweck angepasst werden kann.

Die Aufgabe wird gelöst durch eine Unterwasservorrichtung mit einer Hyperspektralkamera zur Bildaufnahme eines Wasserbodens, einem ersten Gehäuseteil, einem zweiten Gehäuseteil, das mit dem ersten Gehäuseteil wasserdicht wieder lösbar verbunden ist und mit dem ersten Gehäuseteil einen Hohlraum umschließt, in dem die Hyperspektralkamera angeordnet ist, und einem elektrischen Energiespeicher zum Versorgen der Hyperspektralkamera mit elektrischer Energie, der in einem anderen Hohlraum angeordnet ist, wobei der andere Hohlraum durch einen Wandabschnitt des ersten und/oder zweiten Gehäuseteils von dem Hohlraum getrennt ist.

Die erfindungsgemäße Unterwasservorrichtung weist den Vorteil auf, dass sie kompakt ausgebildet ist und aus wenigen Bauteilen besteht. Darüber hinaus ist der elektrische Energiespeicher einfach zugänglich, sodass er auf einfache und schnelle Weise ausgewechselt werden kann. Da der andere Hohlraum von dem Hohlraum wasserdicht getrennt ist, wird auf einfache Weise verhindert, dass beim Wechseln des elektrischen Energiespeichers Wasser versehentlich in den Hohlraum gelangt.

Außerdem kann sie schnell zusammen- und auseinandergebaut werden. Nach einem Lösen der Verbindung zwischen dem ersten Gehäuseteil und dem zweiten Gehäuseteil kann auf die in dem Hohlraum angeordnete Hyperspektralkamera einfach zugegriffen werden. Darüber hinaus kann nach dem Lösen der Verbindung auf weitere in dem Hohlraum angeordnete mechanische Komponenten und/oder elektrischer Verbraucher auf einfache Weise zugegriffen. Im Ergebnis kann die Unterwasservorrichtung schnell umgerüstet werden, um sie an ihren Einsatzzweck und/oder den Einsatzort anzupassen.

Beim Betrieb kann die Unterwasservorrichtung teilweise oder vollständig im Wasser angeordnet sein. Dabei bietet sich zur Untersuchung eines Wasserbodens an, dass die Unterwasservorrichtung vollständig in das Wasser eintaucht. Die Unterwasservorrichtung kann zur Untersuchung von Meeres- und Süßwasserökosysteme eingesetzt werden.

Die wieder lösbare Verbindung zwischen dem ersten Gehäuseteil und dem zweiten Gehäuseteil ist wasserdicht ausgebildet. Dadurch ist verhindert, dass Wasser in den Hohlraum eintritt und somit elektrische Verbraucher beschädigt. Durch die wasserdichte Verbindung ist sichergestellt, dass in einem Verbindungsbereich zwischen dem ersten Gehäuseteil und dem zweiten Gehäuseteil keine Durchlässe bestehen, durch die Wasser in den Hohlraum einströmen kann. Die wieder lösbare Verbindung kann eine Schraubverbindung aufweisen.

Elektrische Verbraucher sind Bestandteile der Unterwasservorrichtung, die Elektronikbauteile aufweisen und somit beschädigt werden können, wenn sie in Kontakt mit Wasser, insbesondere Kondensationswasser, gelangen und/oder die Luftfeuchtigkeit der sie umgebenden Luft zu hoch ist.

Eine Hyperspektralkamera ist eine Kamera, die multispektrale Daten in sehr engen Spektralbändern des sichtbaren Lichts, des nahen und mittleren Infrarots aufzeichnet. Hyperspektralkameras ermöglichen somit eine hohe spektrale Auflösung der objektspezifischen Signaturen in mehr als 15, generell jedoch in 30-200 aneinandergrenzenden Kanälen und ermöglichen somit die Dokumentation eines nahezu kontinuierlichen Spektrums für jedes Bildelement. Bei einer besonderen Ausführung kann die Unterwasservorrichtung eine Farbkamera zur Bildaufnahme des Wasserbodens aufweisen. Die Farbkamera kann in dem Hohlraum angeordnet sein und/oder eine RGB-Kamera sein.

Die Farbkamera, insbesondere RGB-Kamera, ist keine Hyperspektralkamera. Die Farbkamera unterscheidet sich von der Hyperspektralkamera darin, dass sie weniger Kanäle, insbesondere genau drei Kanäle, als die Hyperspektralkamera aufweist. Dementsprechend kann bei einer Farbkamera das betrachtete Objekt nicht so hoch spektral aufgelöst werden wie bei einer Hyperspektralkamera. Die Verwendung einer Farbkamera und einer Hyperspektralkamera bietet den Vorteil, dass mehrere Bilder vom gleichen Objekt gemacht werden, was für die Bildauswertung vorteilhaft ist.

Die Farbkamera und die Hyperspektralkamera sind in einem durch das erste Gehäuseteil oder das zweite Gehäuseteil teilweise umschlossenen Hohlraumabschnitt angeordnet. Somit müssen bei der Anordnung und Befestigung der Hyperspektralkamera und/oder der Farbkamera Toleranzen von nur einem Gehäuseteil berücksichtigt werden.

Das erste Gehäuseteil kann einen Durchbruch aufweisen, in dem eine transparente Platte, insbesondere eine Glasplatte, wasserdicht angeordnet ist. Die Hyperspektralkamera kann derart angeordnet sein, dass das Bild durch die transparente Platte hindurch tätigbar ist. Die Farbkamera kann in gleicher Weise innerhalb des Hohlraums angeordnet sein, dass Bilder durch die transparente Platte tätigbar sind. Die Hyperspektralkamera und die RGB-Kamera können vollständig innerhalb des Hohlraums angeordnet sein. Im Ergebnis kann auf einfache Weise sichergestellt werden, dass die Farbkamera und/oder Hyperspektralkamera davor geschützt sind, mit Wasser in Kontakt zu gelangen und Bilder vom Wasserboden getätigt werden können.

Bei einer besonderen Ausführung kann eine Verbindungsrichtung zum Verbinden des ersten Gehäuseteils mit dem zweiten Gehäuseteil entlang einer Mittelachse des ersten Gehäuseteils und/oder des zweite Gehäuseteils gerichtet sein. Darüber hinaus kann die Verbindungsrichtung senkrecht zu einer Stirnseitenebene des ersten Gehäuseteils und/oder des zweiten Gehäuseteils gerichtet sein. Die Verbindung des ersten Gehäuseteils und des zweiten Gehäuseteils entlang der Verbindungsrichtung bietet den Vorteil, dass der abzudichtende Verbindungsbereich klein ist. So muss lediglich eine Abdichtung entlang eines Stirnseitenumfangs des ersten Gehäuseteils und/oder des zweiten Gehäuseteils erfolgen. Die Stirnseitenebene kann eine Achsnormalebene zur Mittelachse sein und/oder parallel zu einer Vertikalebene sein. Dabei steht die Vertikalebene senkrecht auf einem horizontal verlaufenden Wasserboden.

Zum Abdichten kann wenigstens eine Dichtung zwischen dem ersten Gehäuseteil und dem zweiten Gehäuseteil angeordnet sein Die Dichtung kann an einem Stirnseitenbereich des ersten und/oder zweiten Gehäuseteils angeordnet sein. Im Ergebnis kann die wasserdichte Verbindung zwischen dem ersten Gehäuseteil und dem zweiten Gehäuseteil auf einfache Weise realisiert werden.

Nach dem Verbinden der beiden Gehäuseteile kann die Stirnseite des ersten Gehäuseteils in Kontakt mit dem zweiten Gehäuseteil sein und/oder die Stirnseite des zweiten Gehäuseteils kann in Kontakt mit dem ersten Gehäuseteil sein.

Bei einer besonderen Ausführung können die beiden Gehäuseteile per Hand miteinander verbindbar und/oder per Hand voneinander lösbar sein. Das Verbinden der beiden Gehäuseteile miteinander oder das Lösen der beiden Gehäuseteile voneinander erfolgt zerstörungsfrei. Somit kann die Unterwasservorrichtung auf einfache Weise zusammen- oder auseinandergebaut werden.

Ein Zusammenbau bzw. ein Auseinanderbau der Unterwasservorrichtung gestaltet sich besonders einfach, wenn das erste Gehäuseteil eine Gehäusehälfte und das zweite Gehäuseteil eine zweite Gehäusehälfte der Unterwasservorrichtung bildet. Bei dieser Ausführung weist die Unterwasservorrichtung genau zwei Gehäusebestandteile auf, nämlich die beiden Gehäusehälften. Der Aufwand zum Zusammenbau bzw. Auseinanderbau der Unterwasservorrichtung ist bei dieser Ausführung minimiert.

Bei einer besonderen Ausführung kann der Wandabschnitt des ersten Gehäuseteils und/oder des zweiten Gehäuseteils den Hohlraum von dem anderen Hohlraum vollständig trennen. Dies ist vorteilhaft, weil nicht ausgeschlossen werden kann, dass bei einem Wechsel des elektrischen Energiespeichers Wasser in den anderen Hohlraum einströmen kann. Ein Wechsel des elektrischen Energiespeichers wird üblicherweise auf einem Schiff erfolgen. Abhängig vom Seegang kann nicht ausgeschlossen werden, dass die Unterwasservorrichtung mit Wasser in Kontakt gelangt.

Jedoch wird bei der erfindungsgemäßen Unterwasservorrichtung durch den Wandabschnitt verhindert, dass Wasser aus dem anderen Hohlraum in den Hohlraum gelangt. Im Ergebnis wird durch den Wandabschnitt vermieden, dass die im Hohlraum angeordneten elektrischen Verbraucher, wie die Kameras, Steuervorrichtungen, etc., mit Wasser in Kontakt gelangen. Aufgrund der wasserdichten Trennung des Hohlraums von dem anderen Hohlraum kann bei der erfindungsgemäßen Unterwasservorrichtung ein Wechsel des elektrischen Energiespeichers auch auf einem Schiff erfolgen.

Die Unterwasservorrichtung ist derart ausgebildet, dass der Wandabschnitt des ersten Gehäuseteils und/oder des zweiten Gehäuseteils sowohl den Hohlraum als auch den anderen Hohlraum begrenzt. Dadurch lässt sich eine besonders kompakte Unterwasservorrichtung realisieren. Ein Vorteil einer kompakten Unterwasservorrichtung besteht darin, dass sie unter Wasser leichter manövriert werden kann als groß ausgebildete Unterwasservorrichtungen.

Bei einer besonderen Ausführung kann der elektrische Energiespeicher derart ausgebildet sein, dass er in den anderen Hohlraum einschiebbar ist. Dadurch kann der elektrische Energiespeicher auf einfache Weise in den anderen Hohlraum eingebracht werden. In gleicher Weise kann der elektrische Energiespeicher aus dem anderen Hohlraum ausgeschoben werden. Daher kann bei der Unterwasservorrichtung ein Einbringen des elektrischen Energiespeichers in den anderen Hohlraum oder ein Ausbringen des elektrischen Energiespeichers aus dem anderen Hohlraum auf einfache Weise erfolgen.

Der elektrische Energiespeicher kann modular ausgebildet sein, wodurch sich der Ein- und Ausbau weiter vereinfacht. Der elektrische Energiespeicher kann wenigstens eine Batterie aufweisen.

Beim Einschieben des elektrischen Energiespeichers in den anderen Hohlraum kann automatisch eine elektrische Verbindung zwischen dem elektrischen Energiespeicher und der Hyperspektralkamera und/oder einem anderen elektrischen Verbraucher der Unterwasservorrichtung hergestellt werden. Der elektrische Energiespeicher kann eine elektrische Schnittstelle, wie beispielsweise einen Stecker, aufweisen, die zum Realisieren der elektrischen Verbindung mit einer anderen elektrischen Schnittstelle des ersten oder zweiten Gehäuseteils gekoppelt wird. Dadurch ist der Einbau des elektrischen Energiespeichers besonders einfach, weil die durch den Benutzer zu tätigenden Schritte minimiert sind. In dem Wandabschnitt kann ein Durchbruch vorhanden sein, durch den elektrische Leitungen geführt werden. Mittels der elektrischen Leitungen können elektrische Verbraucher der Unterwasservorrichtung mit dem elektrischen Energiespeicher elektrisch verbunden sein.

Die Unterwasservorrichtung kann derart ausgebildet sein, dass eine elektrische Leitung zwischen dem elektrischen Energiespeicher und der Hyperspektralkamera und/oder zwischen dem elektrischen Energiespeicher und einem anderen elektrischen Verbraucher ausschließlich innerhalb des ersten Gehäuseteils und/oder des zweiten Gehäuseteils verläuft. Dabei kann die elektrische Leitung derart verlaufen, dass sie nicht in Kontakt mit Wasser gelangt. Dies bietet den Vorteil, dass beim Tauchvorgang die Gefahr beseitigt ist, dass beispielsweise der Benutzer unbeabsichtigt die elektrische Verbindung zwischen dem elektrischen Energiespeicher und dem elektrischen Verbraucher trennt.

Der andere Hohlraum kann einen Hohlraumdeckel aufweisen, mittels dem der andere Hohlraum verschlossen werden kann. Der Hohlraumdeckel kann mit dem ersten oder zweiten Gehäuseteil befestigt sein. Außerdem kann der Hohlraumdeckel relativ zu dem ersten oder zweiten Gehäuseteil bewegbar sein.

Bei einer besonderen Ausführung kann wenigstens eine schienenförmige Aufsetzeinrichtung zum Aufsetzen an einen Boden vorhanden sein. An die Aufsetzeinrichtung kann wenigstens ein Gewicht angebracht werden. Ein Teilbereich der Aufsetzeinrichtung kann mit dem ersten Gehäuseteil und ein anderer Teilbereich der Schiene kann mit dem zweiten Gehäuseteil fest verbunden sein. Die Aufsetzeinrichtung kann derart ausgebildet ist, dass das Gewicht an unterschiedlichen Stellen der Schiene positionierbar ist. Dadurch kann auf einfache Weise der Masseschwerpunkt der Unterwasservorrichtung eingestellt werden. So kann das Gewicht derart an der Schiene positionierbar werden, dass ein Auftriebsschwerpunkt der Unterwasservorrichtung und ein Masseschwerpunkt der Unterwasservorrichtung in einer Achsnormalebene zur Mittelachse der Unterwasservorrichtung liegen. Dadurch wird auf einfache Weise verhindert, dass sich die Unterwasservorrichtung dreht und der Benutzer eine Kraft aufbringen muss, die die Drehung verhindert.

Die Unterwasservorrichtung kann mehrere Aufsetzeinrichtungen, insbesondere genau zwei, Aufsetzeinrichtungen aufweisen. Die Aufsetzeinrichtungen können parallel oder gewinkelt zueinander verlaufen. Außerdem können die Aufsetzeinrichtungen von dem ersten und/oder zweiten Gehäuseteil derart vorragen, dass die Unterwasservorrichtung mittels der Aufsetzeinrichtungen auf den Boden stellbar ist. Somit muss die Unterwasservorrichtung keine separaten Füße aufweisen, mittels der die Unterwasservorrichtung auf den Boden gestellt werden kann.

Die Unterwasservorrichtung kann basierend auf den aufgenommenen Bildern den Wasserboden kartieren. Durch Verwendung der Unterwasservorrichtung ist im Vergleich zu den bisherigen Unterwasservorrichtungen eine sehr genaue Untersuchung des Wasserbodens möglich.

Bei einer besonderen Ausführung kann die Unterwasservorrichtung derart ausgebildet sein, dass sie von Hand betätigbar und/oder bedienbar und/oder tragbar ist. Dies bedeutet, dass die Unterwasservorrichtung nicht per Fernwartung von einem Schiff gesteuert wird, sondern ausschließlich von dem Taucher. Dabei kann die Unterwasservorrichtung propellerlos ausgebildet sein. Dies bedeutet, dass der Antrieb der Unterwasservorrichtung ausschließlich durch den Taucher erfolgt. Die Unterwasservorrichtung weist somit keinen Antriebsmotor zum Antreiben der Unterwasservorrichtung auf.

Bei einer besonderen Ausführung können das erste Gehäuseteil und/oder das zweite Gehäuseteil einen anderen Durchbruch und einen Deckel zum wasserdichten Verschließen des anderen Durchbruchs aufweisen. Ein Sensor der Unterwasservorrichtung und der andere Durchbruch können in einer Ebene angeordnet sind. Die Ebene kann eine Achsnormalebene zur Mittelachse der Unterwasservorrichtung sein.

Der Deckel kann aus einem anderen Material bestehen als das erste Gehäuseteil und/oder das zweite Gehäuseteil. Das erste Gehäuseteil und/oder das zweite Gehäuseteil können aus Metall bestehen. Metall verhindert jedoch, dass einige Messsignale und/oder Datensignale zu dem Sensor, wie beispielsweise einem GNSS-Sensor (Global Navigation Satellite System), gelangen. Daher weist der Deckel den Vorteil auf, dass derartige Messsignale und/oder Datensignale empfangen werden können. Das andere Material des Deckels kann nämlich derart ausgebildet sein, dass es eine drahtlose Kommunikation zwischen dem Sensor und einem anderen Kommunikationsmittel zulässt. Insbesondere kann das andere Material derart ausgewählt sein, dass es Funkdaten nicht reflektiert und somit den Datenempfang des Sensors ermöglicht.

Die Unterwasservorrichtung kann wenigstens einen Handgriff zum Steuern der Unterwasservorrichtung aufweisen. Der Handgriff kann an dem ersten Gehäuseteil und/oder dem zweiten Gehäuseteil befestigt sein. Der Handgriff ermöglicht, dass die Unterwasservorrichtung auf einfache Weise manövriert wird.

Das erste Gehäuseteil und/oder das zweite Gehäuseteil können eine von dem Handgriff weg gerichtete Einbuchtung aufweisen. Die Einbuchtung und der Handgriff sind derart angeordnet, dass sie in einer Achsnormalebene zur Mittelachse der Unterwasservorrichtung, angeordnet sind. Da unter Wasser oftmals Handschuhe getragen werden, ermöglicht die Einbuchtung, dass der Handgriff nah zu dem ersten Gehäuseteil und/oder dem zweiten Gehäuseteil angeordnet werden kann. Der Handgriff kann vom Benutzer problemlos umgriffen werden, weil aufgrund der Einbuchtung ausreichend Platz vorhanden ist.

Bei einer besonderen Ausführung kann die Unterwasservorrichtung ein Ventil aufweisen, das öffnet, wenn ein Druck in dem Hohlraum zu hoch ist. Alternativ kann das Ventil durch einen Benutzer geöffnet werden. Darüber hinaus kann ein anderes Ventil vorhanden sein, das öffnet, wenn der Druck in dem anderen Hohlraum zu hoch ist. Alternativ kann das andere Ventil durch einen Benutzer geöffnet werden. Im Ergebnis kann auf einfache Weise ein Überdruck in dem Hohlraum und/oder dem anderen Hohlraum abgebaut bzw. verhindert werden.

Von besonderem Vorteil ist, wenn die Unterwasservorrichtung eine taucherbetreibbare Unterwasservorrichtung ist. Als taucherbetreibbare Unterwasservorrichtung wird eine Vorrichtung verstanden, die durch einen Taucher im oder unter Wasser betrieben werden kann. Dies bedeutet, dass der Taucher die Unterwasservorrichtung im oder unter Wasser bewegen und somit in die gewünschte Position bewegen kann, um Bilder von dem gewünschten Bereich des Wasserbodens aufzunehmen. Außerdem kann der Taucher die Unterwasservorrichtung im oder unter Wasser betreiben, insbesondere entsprechende Befehle eingeben, um Bilder vom Wasserboden aufzunehmen.

Alternativ kann die Unterwasservorrichtung ein autonomes Unterwasserfahrzeug (autonomous underwater vehicle) sein. Bei dieser Ausführung muss die Unterwasservorrichtung nicht von einem Taucher bewegt werden, um Bilder vom Wasserboden aufzunehmen. Die Steuerung des Unterwasserfahrzeugs kann autonom erfolgen.

Alternativ kann die Unterwasservorrichtung ein kabelgeführtes Unterwasserfahrzeug (remotely operated vehicle) sein. Bei dieser Ausführung muss die Unterwasservorrichtung nicht von einem Taucher bewegt werden, um Bilder vom Wasserboden aufzunehmen. Die Steuerung des Unterwasserfahrzeugs kann durch eine auf einem Schiff befindliche Person erfolgen.

In den Figuren ist der Erfindungsgegenstand schematisch dargestellt, wobei gleiche oder gleichwirkende Elemente zumeist mit denselben Bezugszeichen versehen sind. Dabei zeigt:
Fig. 1 eine Seitenschnittansicht einer erfindungsgemäßen Unterwasservorrichtung ohne elektrische Verbraucher,
Fig. 2 eine Seitenschnittansicht der erfindungsgemäßen Unterwasservorrichtung mit elektrischen Verbrauchern,
Fig. 3 eine Explosionsdarstellung der erfindungsgemäßen Unterwasservorrichtung,
Fig. 4 eine perspektivische Darstellung der erfindungsgemäßen Unterwasservorrichtung,
Fig. 5 eine Ansicht von vorne auf die erfindungsgemäße Unterwasservorrichtung.

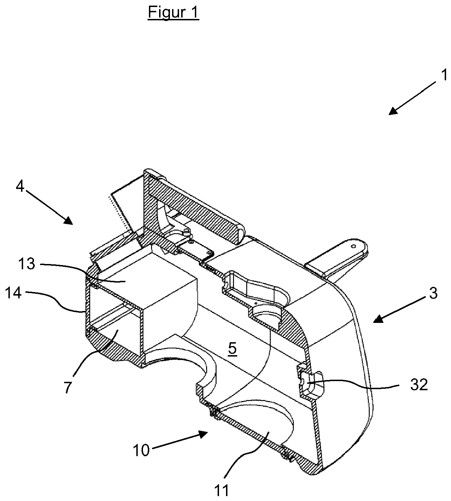

Die in Figur 1 gezeigte Unterwasservorrichtung 1 ist eine taucherbetreibbare Unterwasservorrichtung. Die Unterwasservorrichtung 1 kann alternativ ein autonomes Unterwasserfahrzeug oder ein kabelgeführtes Unterwasserfahrzeug sein.

Die Unterwasservorrichtung 1 weist ein erstes Gehäuseteil 3 und ein zweites Gehäuseteil 4 auf, das mit dem ersten Gehäuseteil 3 wasserdicht wieder lösbar verbunden ist. Das erste und zweite Gehäuseteil 3, 4 umschließen einen Hohlraum 5. Darüber hinaus weist das zweite Gehäuseteil 4 einen anderen Hohlraum 7 auf, der durch einen Wandabschnitt 13 des zweiten Gehäuseteils 4 von dem Hohlraum 5 vollständig und wasserdicht getrennt ist. Der andere Hohlraum 7 wird durch einen Hohlraumdeckel 14 verschlossen. Der Hohlraumdeckel 14 ist mit dem zweiten Gehäuseteil 4 wieder lösbar verbunden. Bei der in Figur 1 dargestellten Ausführung sind weder in dem Hohlraum 5 noch in dem anderen Hohlraum 7 elektrische Verbraucher angeordnet.

Das erste Gehäuseteil 3 weist einen Durchbruch 10 auf. In dem Durchbruch 10 ist eine transparente Platte 11 in Form einer Glasplatte angeordnet ist. Die transparente Platte 11 ist derart ausgebildet und mit dem ersten Gehäuseteil 3 derart verbunden, dass ein Wassereintritt durch den Durchbruch 10 in den Hohlraum 5 verhindert wird.

Das erste Gehäuseteil 3 weist an seinem von dem zweiten Gehäuseteil 4 abgewandten Ende eine Ausnehmung 32 auf. Die Ausnehmung 32 dient zur Aufnahme von in den Figuren nicht dargestellten Sensoren. Alternativ oder zusätzlich kann in der Ausnehmung 32 ein Kommunikationsmittel zum Senden und/oder Empfangen von Daten angeordnet sein. Mittels des Kommunikationsmittels kann eine datentechnische Verbindung mit beispielsweise einem auf einem Schiff angeordneten anderen Kommunikationsmittel hergestellt werden.

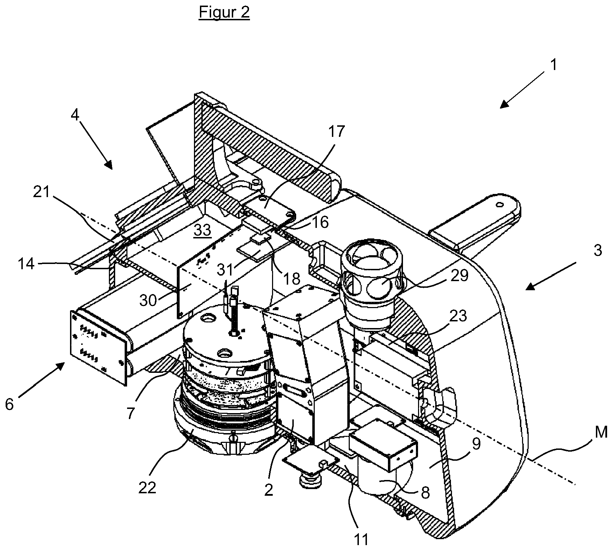

Figur 2 zeigt eine Seitenschnittansicht der erfindungsgemäßen Unterwasservorrichtung 1 mit elektrischen Verbrauchern. Die Unterwasservorrichtung 1 weist eine Hyperspektralkamera 2 und eine Farbkamera 8 auf, die in dem Hohlraum 5 angeordnet sind. Darüber hinaus weist die Unterwasservorrichtung 1 einen elektrischen Energiespeicher 6 zum Versorgen der Hyperspektralkamera 2 und der Farbkamera 8 mit elektrischer Energie auf. Zudem versorgt der elektrische Energiespeicher 6 weitere elektrische Verbraucher der Unterwasservorrichtung 1. Der elektrische Energiespeicher 6 ist in dem anderen Hohlraum 7 angeordnet und kann mehrere Batterien aufweisen.

In den Figuren sind die elektrischen Leitungen zwischen dem elektrischen Energiespeicher 6 und der Farbkamera 8 und der Hyperspektralkamera 2 und den weiteren nicht dargestellten elektrischen Verbrauchern nicht dargestellt. Sie verlaufen jedoch innerhalb des ersten Gehäuseteils 3 und/oder des zweiten Gehäuseteils 4. Insbesondere sind die elektrischen Leitungen derart angeordnet, dass sie nicht mit Wasser in Kontakt kommen und somit nicht außerhalb des ersten Gehäuseteils 3 und des zweiten Gehäuseteils 4 verlaufen.

Die Farbkamera 8 und die Hyperspektralkamera 2 sind derart in dem Hohlraum 5 angeordnet, dass sie jeweils Bilder durch die transparente Platte 11 hindurch tätigen können. Zudem sind die Farbkamera 8 und die Hyperspektralkamera 2 in einem durch das erste Gehäuseteil 3 definierten Hohlraumabschnitt 9 angeordnet. Der Hohlraum 5 setzt sich aus dem durch das erste Gehäuseteil 3 definierten Hohlraumabschnitt 9 und einen durch das zweite Gehäuseteil 4 definierten anderen Hohlraumabschnitt 33 zusammen.

Die Unterwasservorrichtung 1 weist in dem zweiten Gehäuseteil 4 einen anderen Durchbruch 16 auf. Der andere Durchbruch 16 wird durch einen Deckel 17 verschlossen. Der Deckel 17 ist aus einem anderen Material gefertigt als das erste Gehäuseteil 3 und das zweite Gehäuseteil 4. Ein Sensor 18, insbesondere ein GNSS-Sensor, ist unterhalb des Deckels 17 angeordnet. Dabei ist der Sensor 18 derart angeordnet, dass er und der andere Durchbruch 16 in einer Ebene, insbesondere einer Achsnormalebene zu einer Mittelachse M der Unterwasservorrichtung 1, angeordnet sind.

Darüber hinaus weist die Unterwasservorrichtung 1 eine Anzeigeeinrichtung 21 auf, mittels der beispielsweise durch die Kameras aufgenommene Bilder einem Benutzer dargestellt werden. Darüber hinaus können über die Anzeigeeinrichtung 21 Betriebszustände der Unterwasservorrichtung 1 dem Benutzer dargestellt werden. Die von den Kameras 2, 8 und/oder anderen elektrischen Verbrauchern ermittelten Daten können durch eine in dem Hohlraum 5 angeordnete Steuervorrichtung 23 verarbeitet werden. Die Anzeigeeinrichtung 21 und/oder die elektrischen Verbraucher und/oder die Steuervorrichtung 23 sind in dem Hohlraum 5 angeordnet.

Die Unterwasservorrichtung 1 weist außerdem eine Messeinrichtung 22 auf, wie beispielsweise ein Doppler Velocity Log, mittels der die Richtung der Unterwasservorrichtung 1 und Geschwindigkeit über Grund messbar sind. Die Messeinrichtung 22 ragt aus einer Öffnung des ersten Gehäuseteils 3 und des zweiten Gehäuseteils 4 vor. Dabei ist die Messeinrichtung 22 derart ausgebildet und/oder mit dem ersten Gehäuseteil 3 und dem zweiten Gehäuseteil 4 derart verbunden, dass kein Wasser in den Hohlraum 5 der Unterwasservorrichtung 1 einströmen kann.

Die Unterwasservorrichtung 1 weist außerdem ein Positionsbestimmungselement 29 zum Bestimmen der Position der Unterwasservorrichtung 1 unter Wasser auf. Das Positionsbestimmungselement 29 kann ein USBL-Gerät (Ultra Short Baseline) sein und in einer Aussparung einer Außenseite des ersten Gehäuseteils 3 angeordnet sein.

Darüber hinaus weist die Unterwasservorrichtung 1 eine Energieverteileinheit 30 auf, die innerhalb des Hohlraums 5 angeordnet ist. Die Energieverteileinheit 30 dient zum Verteilen der elektrischen Energie von dem elektrischen Energiespeicher zu den elektrischen Verbrauchern der Unterwasservorrichtung 1. Dabei kann die Energieverteileinheit 30 die elektrische Verbindung zwischen dem elektrischen Energiespeicher und dem elektrischen Verbraucher trennen, sofern beispielsweise ein Gefahrzustand, wie ein Eindringen von Wasser in den Hohlraum 5, ermittelt wird.

Außerdem weist die Unterwasservorrichtung 1 ein Detektionsmittel 31, wie einen IMU-Sensor (inertial measurement unit) zum Detektieren einer Bewegung der Unterwasservorrichtung 1. Das Detektionsmittel 31 wird zur Navigation der Unterwasservorrichtung 1 eingesetzt und ist im Hohlraum 5 angeordnet.

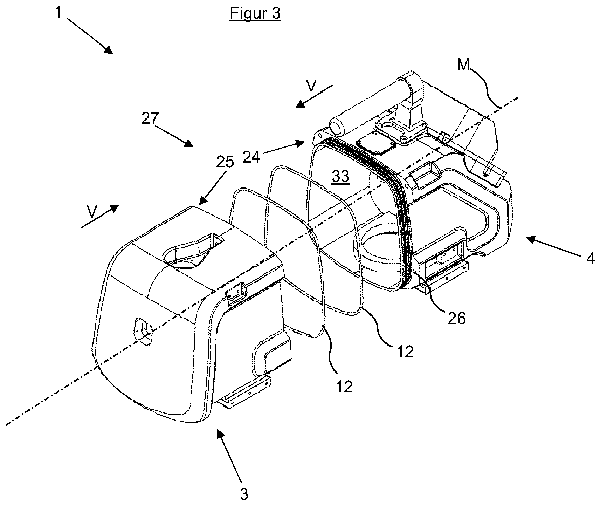

Fig. 3 zeigt eine Explosionsdarstellung der erfindungsgemäßen Unterwasservorrichtung 1. Zum Verbinden der beiden Gehäuseteile 3, 4 werden das erste Gehäuseteil 3 und/oder das zweite Gehäuseteil 4 in Verbindungsrichtung V entlang der Mittelachse M der Unterwasservorrichtung 1 zueinander bewegt. Dabei ist die Verbindungsrichtung V des ersten Gehäuseteils 3 entgegengesetzt gerichtet zu der Verbindungsrichtung V des zweiten Gehäuseteils 4. Beide Verbindungsrichtungen V verlaufen senkrecht zu einer Stirnseitenebene des ersten Gehäuseteils 3 und/oder des zweiten Gehäuseteils 4.

Das erste Gehäuseteil 3 und das zweite Gehäuseteil 4 werden in einem Verbindungsbereich 27 miteinander verbunden. Der Verbindungsbereich 27 verläuft in Umfangsrichtung einer Stirnseite 24 des ersten Gehäuseteil und/oder einer Stirnseite 25 des zweiten Gehäuseteils 4. Insbesondere sind nach einem Verbinden des ersten Gehäuseteils 3 mit dem zweiten Gehäuseteil 4 die Stirnseite 24 des ersten Gehäuseteils 3 in Kontakt mit dem zweiten Gehäuseteil 4 und die Stirnseite 25 des zweiten Gehäuseteils 4 in Kontakt mit dem ersten Gehäuseteil 3. Zum wasserdichten Verbinden des ersten Gehäuseteils 3 mit dem zweiten Gehäuseteil 4 sind zwischen dem ersten Gehäuseteil 3 und dem zweiten Gehäuseteil 4 Dichtungen 12 angeordnet.

Das erste Gehäuseteil 3 und das zweite Gehäuseteil 4 können wieder lösbar miteinander verbunden werden. Die wieder lösbare Verbindung kann beispielsweise durch Schrauben realisiert werden. Dabei ist in Figur 3 ein Loch 26 zur Aufnahme einer Schraube dargestellt.

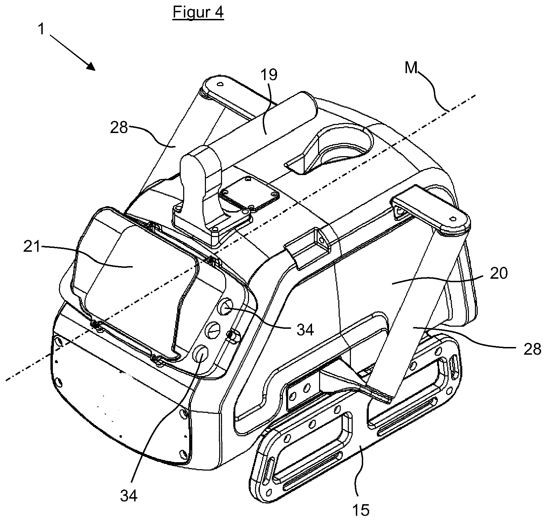

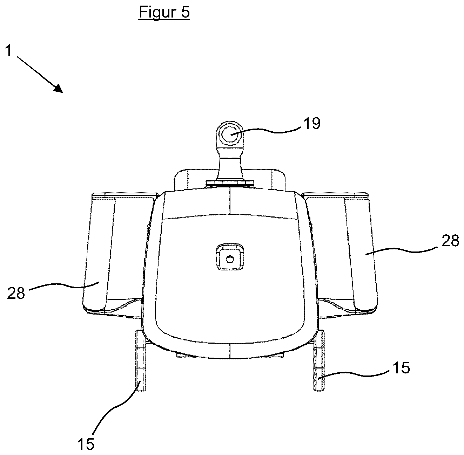

Fig. 4 zeigt eine perspektivische Darstellung der erfindungsgemäßen Unterwasservorrichtung 1 und Fig. 5 zeigt eine Ansicht von vorne auf die erfindungsgemäße Unterwasservorrichtung 1. Die Unterwasservorrichtung 1 weist zwei schienenförmige Aufsetzeinrichtungen 15 auf, die sich bezogen auf das erste Gehäuseteil 3 und das zweite Gehäuseteil 4 gegenüberliegen und zum Aufsetzen der Unterwasservorrichtung 1 auf einen Boden dienen. Dabei ist ein Teilbereich der Aufsetzeinrichtung 15 mit dem ersten Gehäuseteil 3 und ein anderer Teilbereich der Aufsetzeinrichtung 15 mit dem zweiten Gehäuseteil 4 fest verbunden.

Die Aufsetzeinrichtungen 15 sind derart ausgebildet, dass an ihnen wenigstens ein Gewicht an unterschiedlichen Stellen positioniert werden kann. Durch Positionierung des Gewichts kann der Masseschwerpunkt der Unterwasservorrichtung 1 eingestellt werden. Insbesondere kann das Gewicht derart angeordnet werden, dass der Masseschwerpunkt und der Auftriebsschwerpunkt der Unterwasservorrichtung 1 in einer Achsnormalebene zur Mittelachse M angeordnet sind.

Die Aufsetzeinrichtungen 15 stehen von dem ersten Gehäuseteil 3 und dem zweiten Gehäuseteil 4 vor. Dabei stehen sie weiter vor als die Messeinrichtung 22, die in den Figuren 4 und 5 nicht dargestellt ist. Somit kann verhindert werden, dass die Messeinrichtung 22 beim Aufsetzen der Unterwasservorrichtung 1 auf einen Boden in Kontakt mit dem Boden kommt.

Die Unterwasservorrichtung 1 weist außerdem drei Handgriffe auf. Dabei ist an den Seiten der Unterwasservorrichtung 1 jeweils ein Handgriff 28 angeordnet. Zusätzlich ist auf einer Oberseite der Unterwasservorrichtung 1 ein anderer Handgriff 19 angeordnet. An den beiden Seiten der Unterwasservorrichtung 1 ist jeweils eine Einbuchtung 20 in dem ersten Gehäuseteil 3 und dem zweiten Gehäuseteil 4 vorhanden.

Durch die Einbuchtungen 20 kann der Benutzer die Handgriffe 28 umgreifen ohne dass dies durch das erste Gehäuseteil 3 und/oder das zweite Gehäuseteil 4 behindert wird. Die Einbuchtungen 20und die seitlich angeordneten Handgriffe 28 sind derart angeordnet, dass eine Achsnormalebene zur Mittelachse M zumindest einen Handgriff und die Einbuchtung 20 aufweist. Jede der beiden Einbuchtungen 20 erstreckt sich nahezu über die gesamte Länge der Unterwasservorrichtung 1. Dabei können sich die Einbuchtungen 20 derart erstrecken und ausgebildet sein, dass die Betätigung von Knöpfen 34 erleichtert ist. Mittels der Knöpfe 34 können Befehle für die Unterwasservorrichtung 1 eingegeben werden.

### Bezugszeichenliste:

- 1: Unterwasservorrichtung
- 2: Hyperspektralkamera
- 3: erstes Gehäuseteil
- 4: zweites Gehäuseteil
- 5: Hohlraum
- 6: elektrischer Energiespeicher
- 7: anderer Hohlraum
- 8: Farbkamera
- 9: Hohlraumabschnitt
- 10: Durchbruch
- 11: transparente Platte
- 12: Dichtung
- 13: Wandabschnitt
- 14: Hohlraumdeckel
- 15: schienenförmige Aufsetzeinrichtung
- 16: anderer Durchbruch
- 17: Deckel
- 18: Sensor
- 19: anderer Handgriff
- 20: Einbuchtung
- 21: Anzeigeeinrichtung
- 22: Messeinrichtung
- 23: Steuervorrichtung
- 24: Stirnseite des ersten Gehäuseteils
- 25: Stirnseite des zweiten Gehäuseteils
- 26: Loch
- 27: Verbindungsbereich
- 28: Handgriff
- 29: Positionsbestimmungselement
- 30: Energieverteileinheit
- 31: Detektionsmittel
- 32: Ausnehmung
- 33: anderer Hohlraumabschnitt
- 34: Knopf

- V: Verbindungsrichtung

## Patentansprüche

1. Unterwasservorrichtung (1) mit einer Hyperspektralkamera (2) zur Bildaufnahme eines Wasserbodens, einem ersten Gehäuseteil (3), einem zweiten Gehäuseteil (4), das mit dem ersten Gehäuseteil (3) wasserdicht wieder lösbar verbunden ist und mit dem ersten Gehäuseteil (3) einen Hohlraum (5) umschließt, in dem die Hyperspektralkamera (2) angeordnet ist, und einem elektrischen Energiespeicher (6) zum Versorgen der Hyperspektralkamera (2) mit elektrischer Energie, der in einem anderen Hohlraum (7) angeordnet ist, wobei der andere Hohlraum (7) durch einen Wandabschnitt (13) des ersten und/oder zweiten Gehäuseteils (3, 4) von dem Hohlraum (5) getrennt ist.

2. Unterwasservorrichtung (1) nach Anspruch 1, **gekennzeichnet durch** eine Farbkamera (8) zur Bildaufnahme des Wasserbodens, die in dem Hohlraum (5) angeordnet ist.

3. Unterwasservorrichtung (1) nach Anspruch 2, **dadurch gekennzeichnet, dass** die Farbkamera (8) und die Hyperspektralkamera (2) in einem durch das erste Gehäuseteil (3) teilweise umschlossenen Hohlraumabschnitt (9) angeordnet sind.

4. Unterwasservorrichtung nach einem der Ansprüche 1 bis 3, **dadurch gekennzeichnet, dass**
a. das erste Gehäuseteil (3) einen Durchbruch (10) aufweist, in dem eine transparente Platte (11) wasserdicht angeordnet ist und die Hyperspektralkamera (2) derart angeordnet ist, dass das Bild durch die transparente Platte (11) hindurch tätigbar ist und/oder dass
b. eine Verbindungsrichtung (V) zum Verbinden des ersten Gehäuseteils (3) mit dem zweiten Gehäuseteil (4) entlang einer Mittelachse (M) des ersten Gehäuseteils (3) und/oder des zweiten Gehäuseteils (4) gerichtet ist und/oder senkrecht zu einer Stirnseitenebene des ersten Gehäuseteils (3) und/oder des zweiten Gehäuseteils (4) ist und/oder dass
c. nach dem Verbinden der beiden Gehäuseteile (3, 4) eine Stirnseite des ersten Gehäuseteils (3) in Kontakt mit dem zweiten Gehäuseteil (4) ist und/oder eine Stirnseite des zweiten Gehäuseteils (4) in Kontakt mit dem ersten Gehäuseteil (3) ist.

5. Unterwasservorrichtung (1) nach einem der vorhergehenden Ansprüche 1 bis 4, **dadurch gekennzeichnet, dass**
a. wenigstens eine Dichtung (12) zwischen dem ersten Gehäuseteil (3) und dem zweiten Gehäuseteil (4) angeordnet ist und/oder dass
b. die beiden Gehäuseteile (3, 4) per Hand miteinander verbindbar und/oder per Hand voneinander lösbar sind.

6. Unterwasservorrichtung (1) nach einem der Ansprüche 1 bis 5, **dadurch gekennzeichnet, dass**
a. der Wandabschnitt (13) des ersten Gehäuseteils (3) und/oder des zweiten Gehäuseteils (4) den Hohlraum (5) von dem anderen Hohlraum (7) vollständig trennt und/oder
b. der Wandabschnitt (13) des ersten Gehäuseteils (3) und/oder des zweiten Gehäuseteils (4) sowohl den Hohlraum (5) als auch den anderen Hohlraum (7) begrenzt.

7. Unterwasservorrichtung (1) nach einem der Ansprüche 1 bis 6, **dadurch gekennzeichnet, dass** der elektrische Energiespeicher (6) derart ausgebildet ist, dass er in den anderen Hohlraum (7) einschiebbar ist.

8. Unterwasservorrichtung (1) nach Anspruch 7, **dadurch gekennzeichnet, dass** beim Einschieben des elektrischen Energiespeichers (6) in den anderen Hohlraum (7) automatisch eine elektrische Verbindung zwischen dem elektrischen Energiespeicher (6) und der Hyperspektralkamera (2) und/oder einem anderen elektrischen Verbraucher der Unterwasservorrichtung (1) hergestellt wird.

9. Unterwasservorrichtung (1) nach einem der Ansprüche 1 bis 8, **dadurch gekennzeichnet, dass**
a. eine elektrische Leitung zwischen dem elektrischen Energiespeicher (6) und der Hyperspektralkamera (2) und/oder zwischen dem elektrischen Energiespeicher (6) und einem anderen elektrischen Verbraucher ausschließlich innerhalb des ersten Gehäuseteils (3) und/oder des zweiten Gehäuseteils (5) verläuft und/oder derart angeordnet ist, dass sie nicht in Kontakt mit Wasser gelangt und/oder dass
b. die Unterwasservorrichtung (1) einen Hohlraumdeckel (14) zum Verschließen des anderen Hohlraums (7) aufweist.

10. Unterwasservorrichtung (1) nach einem der Ansprüche 1 bis 9, **gekennzeichnet durch** wenigstens eine schienenförmige Aufsetzeinrichtung (15) zum Aufsetzen der Unterwasservorrichtung (1) an einen Wasserboden, an die wenigstens ein Gewicht anbringbar ist.

11. Unterwasservorrichtung (1) nach Anspruch 10, **dadurch gekennzeichnet, dass**
a. die Aufsetzeinrichtung (15) derart ausgebildet ist, dass das Gewicht an unterschiedlichen Stellen der Schiene positionierbar ist und/oder dass
b. das Gewicht derart an der Aufsetzeinrichtung (15) positionierbar ist, dass ein Auftriebsschwerpunkt der Unterwasservorrichtung (1) und ein Masseschwerpunkt der Unterwasservorrichtung (1) in einer Achsnormalebene zu einer Mittelachse (M) der Unterwasservorrichtung liegen und/oder dass
c. ein Teilbereich der Aufsetzeinrichtung (15) mit dem ersten Gehäuseteil (3) und ein anderer Teilbereich der Aufsetzeinrichtung (15) mit dem zweiten Gehäuseteil (4) fest verbunden ist und/oder dass
d. die Unterwasservorrichtung (1) zwei Aufsetzeinrichtungen (15) aufweist, die parallel zueinander verlaufen und/oder von dem ersten Gehäuseteil (3) und/oder dem zweiten Gehäuseteil (4) derart vorragen, dass die Unterwasservorrichtung (1) mittels der Aufsetzeinrichtung (15) auf den Wasserboden stellbar ist.

12. Unterwasservorrichtung (1) nach einem der Ansprüche 1 bis 11, **dadurch gekennzeichnet, dass**
a. die Unterwasservorrichtung (1) basierend auf den aufgenommenen Bildern den Wasserboden kartiert und/oder dass
b. die Unterwasservorrichtung (1) derart ausgebildet ist, dass sie von Hand betätigbar und/oder bedienbar und/oder tragbar ist und/oder dass
c. die Unterwasservorrichtung (1) propelerlos ausgebildet ist.

13. Unterwasservorrichtung (1) nach einem der Ansprüche 1 bis 12, **dadurch gekennzeichnet, dass**
a. das erste Gehäuseteil (3) und/oder das zweite Gehäuseteil (4) einen anderen Durchbruch (16) und einen Deckel (17) zum wasserdichten Verschließen des anderen Durchbruchs (16) aufweisen und ein Sensor (18) der Unterwasservorrichtung (1) und der andere Durchbruch (16) in einer Ebene angeordnet sind oder dass
b. das erste Gehäuseteil (3) und/oder das zweite Gehäuseteil (4) einen anderen Durchbruch (16) und einen Deckel (17) zum wasserdichten Verschließen des anderen Durchbruchs (16) aufweisen und ein Sensor (18) der Unterwasservorrichtung (1) und der andere Durchbruch (16) in einer Ebene angeordnet sind und der Deckel (17) aus einem anderen Material besteht als das erste Gehäuseteil (3) und/oder das zweite Gehäuseteil (4).

14. Unterwasservorrichtung (1) nach einem der Ansprüche 1 bis 13, **dadurch gekennzeichnet, dass**
a. die Unterwasservorrichtung (1) wenigstens einen Handgriff (19) zum Steuern der Unterwasservorrichtung (1) aufweist, der an dem ersten Gehäuseteil (3) und/oder dem zweiten Gehäuseteil (4) befestigt ist oder dass
b. die Unterwasservorrichtung (1) wenigstens einen Handgriff (19) zum Steuern der Unterwasservorrichtung (1) aufweist, der an dem ersten Gehäuseteil (3) und/oder dem zweiten Gehäuseteil (4) befestigt ist und das erste Gehäuseteil (3) und/oder das zweite Gehäuseteil (4) eine von dem Handgriff (19) weg gerichtete Einbuchtung (20) aufweist.

15. Unterwasservorrichtung nach einem der Ansprüche 1 bis 14, **dadurch gekennzeichnet, dass** die Unterwasservorrichtung eine taucherbetreibbare Unterwasservorrichtung oder ein autonomes Unterwasserfahrzeug oder ein kabelgeführtes Unterwasserfahrzeug ist.

## Claims

1. An underwater device (1) with a hyperspectral camera (2) for recording images of a water bottom, a first housing part (3), a second housing part (4) which is releasably connected to the first housing part (3) in a watertight manner and encloses a cavity (5) with the first housing part (3) in which the hyperspectral camera (2) is arranged, and an electrical energy storage device (6) for supplying the hyperspectral camera (2) with electrical energy, which is arranged in another cavity (7), wherein the other cavity (7) is separated from the cavity (5) by a wall section (13) of the first and/or second housing part (3, 4).

2. The underwater device (1) according to claim 1, **characterized by** a color camera (8) for recording the image of the water bottom, which is arranged in the cavity (5).

3. The underwater device (1) according to claim 2, **characterized in that** the color camera (8) and the hyperspectral camera (2) are arranged in a cavity section (9) partially enclosed by the first housing part (3).

4. The underwater device according to any one of claims 1 to 3, **characterized in that**
a. the first housing part (3) has an aperture (10) in which a transparent plate (11) is arranged in a watertight manner and the hyperspectral camera (2) is arranged in such a way that the image can be operated through the transparent plate (11) and/or that
b. a connecting direction (V) for connecting the first housing part (3) to the second housing part (4) is directed along a central axis (M) of the first housing part (3) and/or the second housing part (4) and/or is perpendicular to an end face plane of the first housing part (3) and/or the second housing part (4) and/or that
c. after the two housing parts (3, 4) have been connected, one end face of the first housing part (3) is in contact with the second housing part (4) and/or one end face of the second housing part (4) is in contact with the first housing part (3).

5. The underwater device (1) according to any one of preceding claims 1 to 4, **characterized in that**
a. at least one seal (12) is arranged between the first housing part (3) and the second housing part (4) and/or that
b. the two housing parts (3, 4) can be connected to each other and/or disconnected from each other by hand.

6. The underwater device (1) according to any one of claims 1 to 5, **characterized in that**
a. the wall section (13) of the first housing part (3) and/or the second housing part (4) completely separates the cavity (5) from the other cavity (7) and/or
b. the wall section (13) of the first housing part (3) and/or the second housing part (4) delimits both the cavity (5) and the other cavity (7).

7. The underwater device (1) according to any one of claims 1 to 6, **characterized in that** the electrical energy storage device (6) is designed in such a way that it can be inserted into the other cavity (7).

8. The underwater device (1) according to claim 7, **characterized in that** an electrical connection is automatically established between the electrical energy storage device (6) and the hyperspectral camera (2) and/or another electrical consumer of the underwater device (1) when the electrical energy storage device (6) is inserted into the other cavity (7).

9. The underwater device (1) according to any one of claims 1 to 8, **characterized in that**
a. an electrical line between the electrical energy storage device (6) and the hyperspectral camera (2) and/or between the electrical energy storage device (6) and another electrical consumer runs exclusively within the first housing part (3) and/or the second housing part (5) and/or is arranged in such a way that it does not come into contact with water and/or that
b. the underwater device (1) has a cavity cover (14) for the closure of the other cavity (7).

10. Underwater device (1) according to any one of claims 1 to 9, **characterized by** at least one rail-shaped attachment device (15) for attaching the underwater device (1) to a water bottom, to which at least one weight can be attached.

11. The underwater device (1) according to claim 10, **characterized in that**
a. the attachment device (15) is designed in such a way that the weight can be positioned at different points on the rail and/or that
b. the weight can be positioned on the attachment device (15) in such a way that a center of buoyancy of the underwater device (1) and a center of mass of the underwater device (1) lie in an axial normal plane to a central axis (M) of the underwater device and/or that
c. a partial area of the attachment device (15) is firmly connected to the first housing part (3) and another partial area of the attachment device (15) is firmly connected to the second housing part (4) and/or that
d. the underwater device (1) has two attachment devices (15) which run parallel to one another and/or project from the first housing part (3) and/or the second housing part (4) in such a way that the underwater device (1) can be placed on the water bottom by means of the attachment device (15).

12. The underwater device (1) according to any one of claims 1 to 11, **characterized in that**
a. the underwater device (1) maps the water bottom based on the recorded images and/or that
b. the underwater device (1) is designed in such a way that it can be actuated and/or operated and/or carried by hand and/or that
c. the underwater device (1) is designed without a propeller.

13. The underwater device (1) according to any one of claims 1 to 12, **characterized in that**
a. the first housing part (3) and/or the second housing part (4) have another aperture (16) and a cover (17) for the watertight closure of the other aperture (16) and a sensor (18) of the underwater device (1) and the other aperture (16) are arranged in one plane or that
b. the first housing part (3) and/or the second housing part (4) have another aperture (16) and a cover (17) for the watertight closure of the other aperture (16) and a sensor (18) of the underwater device (1) and the other aperture (16) are arranged in one plane and the cover (17) is made of a different material than the first housing part (3) and/or the second housing part (4).

14. The underwater device (1) according to any one of claims 1 to 13, **characterized in that**
a. the underwater device (1) has at least one handle (19) for controlling the underwater device (1), which is attached to the first housing part (3) and/or the second housing part (4), or that
b. the underwater device (1) has at least one handle (19) for controlling the underwater device (1), which is attached to the first housing part (3) and/or the second housing part (4) and the first housing part (3) and/or the second housing part (4) has an indentation (20) directed away from the handle (19).

15. The underwater device according to any one of claims 1 to 14, **characterized in that** the underwater device is a diver-operated underwater device or an autonomous underwater vehicle or a cable-operated underwater vehicle.

## Revendications

1. Dispositif subaquatique (1) comportant une caméra hyperspectrale (2) pour enregistrer des images d'un fond aquatique, un premier élément de boîtier (3), un deuxième élément de boîtier (4) qui est connecté de manière amovible au premier élément de boîtier (3) de manière étanche à l'eau et avec lequel le premier élément de boîtier (3) forme une cavité (5) dans laquelle est agencée la caméra hyperspectrale (2), et un accumulateur électrique (6) pour alimenter la caméra hyperspectrale (2) en énergie électrique, qui est agencé dans une autre cavité (7), dans lequel ladite autre cavité (7) est séparée de la cavité (5) par une section de paroi (13) du premier et/ou du deuxième élément de boîtier (3, 4).

2. Dispositif subaquatique (1) selon la revendication 1, **caractérisé par** une caméra couleur (8) pour enregistrer des images du fond aquatique, qui est agencée dans la cavité (5).

3. Dispositif subaquatique (1) selon la revendication 2, **caractérisé en ce que** la caméra couleur (8) et la caméra hyperspectrale (2) sont agencées dans une section de cavité (9) partiellement entourée par le premier élément de boîtier (3).

4. Dispositif subaquatique selon l'une des revendications 1 à 3, **caractérisé en ce que**
a. le premier élément de boîtier (3) comporte une ouverture (10) où une plaque transparente (11) est agencée de manière étanche à l'eau et la caméra hyperspectrale (2) est agencée de telle sorte que l'image peut être activée à travers la plaque transparente (11), et/ou
b. une direction de connexion (V) pour connecter le premier élément de boîtier (3) au deuxième élément de boîtier (4) est dirigée le long d'un axe central (M) du premier élément de boîtier (3) et/ou du deuxième élément de boîtier (4) et/ou perpendiculairement à un plan de côté avant du premier élément de boîtier (3) et/ou du deuxième élément de boîtier (4), et/ou
c. après la connexion des deux éléments de boîtier (3, 4), un côté avant du premier élément de boîtier (3) est en contact avec le deuxième élément de boîtier (4) et/ou un côté avant du deuxième élément de boîtier (4) est en contact avec le premier élément de boîtier (3).

5. Dispositif subaquatique (1) selon l'une des revendications précédentes 1 à 4, **caractérisé en ce que**
a. au moins un joint d'étanchéité (12) est agencé entre le premier élément de boîtier (3) et le deuxième élément de boîtier (4), et/ou
b. les deux éléments de boîtier (3, 4) peuvent être connectés manuellement l'un à l'autre et/ou détachés manuellement l'un de l'autre.

6. Dispositif subaquatique (1) selon l'une des revendications 1 à 5, **caractérisé en ce que**
a. la section de paroi (13) du premier élément de boîtier (3) et/ou du deuxième élément de boîtier (4) sépare complètement la cavité (5) de l'autre cavité (7), et/ou
b. la section de paroi (13) du premier élément de boîtier (3) et/ou du deuxième élément de boîtier (4) délimite à la fois la cavité (5) et l'autre cavité (7).

7. Dispositif subaquatique (1) selon l'une des revendications 1 à 6, **caractérisé en ce que** l'accumulateur électrique (6) est conçu de manière à pouvoir être inséré dans ladite autre cavité (7).

8. Dispositif subaquatique (1) selon la revendication 7, **caractérisé en ce que** lors de l'insertion de l'accumulateur électrique (6) dans ladite autre cavité (7), une connexion électrique s'établit automatiquement entre l'accumulateur électrique (6) et la caméra hyperspectrale (2) et/ou un autre consommateur électrique du dispositif subaquatique (1).

9. Dispositif subaquatique (1) selon l'une des revendications 1 à 8, **caractérisé en ce que**
a. une ligne électrique entre l'accumulateur électrique (6) et la caméra hyperspectrale (2) et/ou entre l'accumulateur électrique (6) et un autre consommateur électrique s'étend exclusivement à l'intérieur du premier élément de boîtier (3) et/ou du deuxième élément de boîtier (5), et/ou est agencée de telle manière qu'elle n'entre pas en contact avec l'eau, et/ou
b. le dispositif subaquatique (1) comporte un couvercle de cavité (14) pour la fermeture de ladite autre cavité (7).

10. Dispositif subaquatique (1) selon l'une des revendications 1 à 9, **caractérisé par** au moins un dispositif de placement (15) en forme de rail pour placer le dispositif subaquatique (1) sur un fond aquatique, auquel au moins un poids peut être fixé.

11. Dispositif subaquatique (1) selon la revendication 10, **caractérisé en ce que**
a. le dispositif de placement (15) est conçu de telle sorte que le poids peut être positionné en différents endroits du rail, et/ou
b. le poids peut être positionné sur le dispositif de placement (15) de telle sorte qu'un centre de carène du dispositif subaquatique (1) et un centre de masse du dispositif subaquatique (1) se trouvent dans un plan normal à un axe central (M) du dispositif subaquatique, et/ou
c. une zone partielle du dispositif de placement (15) est connectée solidement au premier élément de boîtier (3) et une autre zone partielle du dispositif de placement (15) est connectée solidement au deuxième élément de boîtier (4), et/ou
d. le dispositif subaquatique (1) comporte deux dispositifs de placement (15) qui s'étendent parallèlement l'un à l'autre et/ou dépassent du premier élément de boîtier (3) et/ou du deuxième élément de boîtier (4) de telle sorte que le dispositif subaquatique (1) peut être positionné sur le fond aquatique au moyen du dispositif de placement (15).

12. Dispositif subaquatique (1) selon l'une des revendications 1 à 11, **caractérisé en ce que**
a. le dispositif subaquatique (1) cartographie le fond aquatique sur la base des images enregistrées, et/ou
b. le dispositif subaquatique (1) est conçu de telle sorte qu'il puisse être actionné et/ou commandé et/ou porté manuellement, et/ou
c. le dispositif subaquatique (1) est conçu sans hélice.

13. Dispositif subaquatique (1) selon l'une des revendications 1 à 12, **caractérisé en ce que**
a. le premier élément de boîtier (3) et/ou le deuxième élément de boîtier (4) comportent une autre ouverture (16) et un couvercle (17) pour la fermeture étanche à l'eau de ladite autre ouverture (16), et un capteur (18) du dispositif subaquatique (1) et ladite autre ouverture (16) sont agencés dans un plan, ou
b. le premier élément de boîtier (3) et/ou le deuxième élément de boîtier (4) comportent une autre ouverture (16) et un couvercle (17) pour la fermeture étanche à l'eau de ladite autre ouverture (16), et un capteur (18) du dispositif subaquatique (1) et ladite autre ouverture (16) sont agencés dans un plan et le couvercle (17) est constitué d'un matériau différent de celui du premier élément de boîtier (3) et/ou du deuxième élément de boîtier (4).

14. Dispositif subaquatique (1) selon l'une des revendications 1 à 13, **caractérisé en ce que**
a. le dispositif subaquatique (1) présente au moins une poignée (19) pour commander le dispositif subaquatique (1), qui est fixée au premier élément de boîtier (3) et/ou au deuxième élément de boîtier (4), ou
b. le dispositif subaquatique (1) comporte au moins une poignée (19) pour commander le dispositif subaquatique (1), qui est fixée au premier élément de boîtier (3) et/ou au deuxième élément de boîtier (4), et le premier élément de boîtier (3) et/ou le deuxième élément de boîtier (4) comportent une échancrure (20) dirigée à l'opposé de la poignée (19).

15. Dispositif subaquatique selon l'une des revendications 1 à 14, **caractérisé en ce que** le dispositif subaquatique est un dispositif subaquatique utilisable par un plongeur ou par un véhicule subaquatique autonome ou guidé par câble.
